# FASCICULE DE BREVET EUROPEEN

(11) **EP 2 749 746 B1**
(45) Date de publication et mention de la délivrance du brevet: **24.01.2018**
(21) Numéro de dépôt: 12306714.2
(22) Date de dépôt: 31.12.2012
(51) Int. Cl.: F01N 3/027

(54) **Unité de stockage d'ammoniac et structure et système associés**
Lagereinheit für Ammoniak, entsprechende Struktur und entsprechendes System
Ammonia storage unit and associated structure and system

(43) Date de publication de la demande: 02.07.2014
(73) Titulaire: Aaqius & Aaqius S.A., 1207 Genève (CH)
(72) Inventeur: Dementhon, Jean-Baptiste, 75011 Paris (FR)
(74) Mandataire: Regimbeau

(56) Documents cités:
- EP-A1- 1 977 817
- EP-A1- 2 522 823
- US-B1- 6 298 961

## Description

### Domaine de l'invention

L'invention concerne d'une façon générale le stockage de l'ammoniac dans des applications de réduction des oxydes d'azote NOx par réduction catalytique sélective (SCR), notamment pour la réduction des émissions de polluants par les moteurs à combustion interne, en particulier les moteurs diesel.

### Etat de l'art

Les émissions de polluants liées au transport sont depuis près de trente ans un moteur de progrès de premier plan de l'industrie. L'augmentation progressive de la sévérité des limites en émission pour les quatre polluants réglementés (CO, HC, NOₓ, particules) a permis d'améliorer significativement la qualité de l'air notamment dans les grandes agglomérations.

L'utilisation toujours croissante de l'automobile nécessite de poursuivre les efforts pour réduire encore davantage ces émissions de polluants. Une diminution de la tolérance vis-à-vis des seuils d'émission Européens est attendue en 2014 dans le cadre des étapes pour l'entrée en vigueur de la norme Euro6. De telles mesures visent à réduire la pollution locale. Disposer de technologies de dépollution à forte efficacité dans toutes les conditions de roulage est ainsi un enjeu majeur pour l'industrie du transport. Dans ce contexte, la réduction des oxydes d'azote (NOₓ) en mélange pauvre, c'est-à-dire en mélange comprenant de l'oxygène en excès, représente un enjeu important associé à une problématique complexe.

Par ailleurs, la consommation de carburant, en lien direct avec les émissions de CO₂, a été propulsée en quelques années au rang de préoccupation majeure de l'automobile. Ainsi, une réglementation a été mise en place au niveau Européen à partir de 2012 sur les émissions de CO₂ des véhicules particuliers. Il est d'ores et déjà acquis que cette limite sera régulièrement abaissée au cours des décennies à venir. La réduction des émissions CO₂ s'est donc imposée comme le nouveau moteur de croissance pour toute l'industrie des transports.

Cette double problématique réduction de la pollution locale (NOₓ) et réduction de la consommation carburant (CO₂) est particulièrement difficile pour le moteur Diesel dont la combustion en mélange pauvre s'accompagne d'émissions en NOₓ difficile à traiter.

Dans ce contexte, la technologie de post-traitement SCR (« selective catalytic reduction », réduction catalytique sélective en terminologie anglo-saxonne) est utilisée aussi bien pour les véhicules particuliers que pour les véhicules affectés au transport de marchandises. Il est alors possible de positionner le moteur sur son fonctionnement optimal en rendement, les fortes émissions de NOₓ étant ensuite traitées dans l'échappement par le système SCR permettant une réduction NOx avec une forte efficacité.

Pour permettre la mise en place d'une telle technologie SCR il est nécessaire d'embarquer à bord du véhicule un agent réducteur nécessaire pour la réduction des oxydes d'azote. Le système actuellement retenu par les poids lourds utilise l'urée en solution aqueuse comme agent réducteur. Injecté à l'échappement, l'urée se décompose par effet de la température des gaz d'échappement en ammoniac (NH₃) et permet la réduction des NOₓ sur un catalyseur spécifique. Une solution aqueuse d'urée retenue et standardisée pour le fonctionnement des systèmes actuellement en série de SCR est référencée en AUS32 (le nom commercial en Europe étant Adblue ®)

Ce procédé très efficace souffre pourtant d'un certain nombre d'inconvénients. Il présente une efficacité à froid limitée, alors qu'une telle situation se présente dans plusieurs cas, notamment celui des bus en ville. Le réservoir d'urée présente une masse et un volume important, typiquement 15 à 30L pour un véhicule particulier, 40 à 80L pour un poids-lourds. Un tel encombrement entraîne une complexité d'intégration dans le véhicule d'autant plus importante que le véhicule est petit. Il en résulte un coût élevé de la dépollution, ainsi qu'un excédent de masse qui se fait au détriment de la consommation en carburant du véhicule et donc des émissions de CO2.

Diverses méthodes alternatives de stockage ont été envisagées. L'option de stocker l'ammoniac sous forme gazeuse sous pression présente de nombreux inconvénients en termes de compacité et de sécurité de fonctionnement.

Une méthode privilégiée consiste en une absorption du gaz à l'intérieur d'un matériau, par exemple un sel, disposé dans une enceinte de stockage. Le stockage d'ammoniac est alors réalisé au sein du sel par la formation de complexe chimique du type ammoniacate. Les avantages de ce type de stockage par rapport à l'urée en solution aqueuse sont nombreux. Le stockage au sein d'un sel permet une réduction de masse et de volume du réservoir de stockage significative. Il permet également un bénéfice en termes de bilan CO₂ en raison de la diminution de la masse de réducteur à embarquer pour une autonomie en ammoniac donnée. On économise en effet la quantité d'eau additionnelle prévue pour diluer l'urée dans la configuration classique de la SCR, dite liquide. Par ailleurs, ce type de stockage permet de mettre en oeuvre une absorption de NOₓ à froid avec une efficacité plus élevée. Ce type de stockage assure de plus une réduction des coûts de fabrication car le système d'alimentation et injection de l'ammoniac peut être simplifié.

Pour limiter l'encombrement de l'enceinte de stockage, les constructeurs automobiles privilégient un remplissage ou un remplacement de l'enceinte de stockage, par exemple lors de la maintenance moteur, au moment de la vidange, ou lors d'un remplissage réservoir carburant. La quantité d'ammoniac embarquée à bord d'un véhicule particulier sera de l'ordre de 6 kg pour un équivalent 16 L d'une solution d'urée de type AUS32, ce qui permet d'assurer l'autonomie du véhicule particulier entre deux intervalles de vidange du véhicule. Pour permettre l'alimentation du système en ammoniac, il est prévu un élément de chauffage, électrique ou via un fluide caloporteur par exemple, contrôlé de sorte à doser dans chaque condition d'utilisation l'ammoniac destiné au traitement des oxydes d'azote.

Une fois l'enceinte de stockage, par exemple une cartouche, vide, elle est remplacée par une pleine, par exemple lors d'une maintenance de véhicule, la vide étant renvoyée à une centrale de remplissage. Une cartouche pourra ainsi subir de dix à quinze cycles de vidage / remplissage.

En effet, au cours de la réaction d'absorption, la fixation de l'ammoniac gazeux par le sel solide constituant matériau de stockage s'accompagne d'une augmentation de volume, l'ammoniacate occupant alors un volume très supérieur au volume du sel pur. Le volume du sel après absorption peut être jusqu'à quatre à cinq fois plus important que le volume du sel sans ammoniac. L'augmentation de volume du sel est due non seulement à la dilatation du réseau cristallin du matériau mais aussi à son fractionnement laissant ainsi de l'espace libre entre les microcristaux de complexe ammoniacate. Les phases successives de dilatation, contraction de la matrice poreuse peuvent ainsi provoquer localement des phénomènes de frittage ce qui a un effet négatif sur l'homogénéité de la porosité et de manière générale sur la durabilité du matériau.
Le document EP 2 522 823 décrit un matériau de stockage.

### Résumé de l'invention

Un but de l'invention est de proposer une unité de stockage, et une structure et un système associé, qui pallient tout ou partie des inconvénients précités.

Des buts de l'invention sont en particulier de limiter les efforts mécaniques d'expansion exercés sur les parois d'une enceinte de stockage, et de préserver l'intégrité de la structure de stockage, au cours des cycles d'absorption/désorption.

A cet effet, il est prévu une unité de stockage de gaz par absorption ou adsorption, comprenant une enceinte abritant un élément de stockage de gaz par absorption ou adsorption, comprenant en outre un élément compressible également prévu dans l'enceinte et maintenu en contact avec l'élément de stockage et adapté pour se déformer sous l'action d'efforts exercés par l'élément de stockage lors de variations de volume de l'élément de stockage au cours de phases de stockage et déstockage de gaz, de manière à limiter les efforts appliqués sur l'enceinte, dans laquelle l'élément compressible comprend une matrice poreuse de graphite naturel expansé.

L'invention est avantageusement complétée par les caractéristiques suivantes, prises seules ou en une quelconque de leurs combinaisons techniquement possibles :
- l'élément de stockage est sous forme pulvérulente, compressée ou non compressée ;
- l'élément compressible est constitué un milieu poreux ;
- le graphite naturel expansé est pré-comprimé avant mise en place dans l'enceinte ;
- une série d'éléments de stockage séparés deux à deux par des éléments compressibles ;
- une première combinaison d'un élément de stockage, intégré dans un élément compressible de manière à être entouré par l'élément compressible ;
- une deuxième combinaison d'un élément compressible intégré dans un élément de stockage de manière à être entouré par l'élément de stockage ;
- une alternance de première combinaison et de deuxième combinaison ;
- une série d'éléments de stockage intégrés dans un élément compressible commun ;
- l'élément compressible comprend deux parties, une partie au moins étant maintenue en appui contre l'élément compressible, les deux parties étant interconnectées par un élément mécanique élastique ;
- l'élément mécanique élastique comprend un ressort.

L'invention concerne également une structure de stockage de gaz par absorption ou adsorption, adaptée pour être disposée dans une enceinte, la structure comprenant un élément de stockage de gaz par absorption ou adsorption, comprenant en outre un élément compressible maintenu en contact avec l'élément de stockage et adapté pour se déformer sous l'action d'efforts exercés par l'élément de stockage lors de variations de volume de l'élément de stockage au cours de phases de stockage et déstockage de gaz, dans laquelle l'élément compressible comprend une matrice poreuse de graphite naturel expansé.

L'invention concerne un système de réduction catalytique sélective pour gaz d'échappement de moteur à combustion interne, caractérisé en ce qu'il comprend une telle unité de stockage d'ammoniac et un module d'injection de l'ammoniac dans les gaz d'échappement.

L'invention concerne un procédé d'obtention d'une telle structure de stockage, comprenant des étapes consistant à :
- déposer un élément de stockage comprenant un sel non compressé ou préalablement compressé,
- déposer un élément en un matériau compressible,
ces deux étapes étant répétées alternativement pour former une structure comprenant une série d'éléments de stockage et de couches compressibles intercalaires, maintenues en contact avec les couches de stockage.

L'invention concerne un procédé d'obtention d'une unité de stockage comprenant :
- un tel procédé d'obtention d'une structure de stockage, et
- une ou de plusieurs étape(s) consistant à placer les éléments ou la structure obtenue dans une enceinte des stockage.

### Brève description des figures

D'autres caractéristiques, buts et avantages de l'invention apparaitront lors de la description ci-après d'un mode de réalisation. Aux dessins annexés :
- la figure 1 représente un moteur thermique équipé d'un système de post-traitement SCR par injection d'ammoniac selon un mode de réalisation de l'invention ;
- la figure 2a représente une matrice de stockage constituée de plusieurs éléments de stockage intercalés de plusieurs éléments compressibles d'absorption d'expansion , la matrice de stockage étant vide d'ammoniac ;
- la figure 2b représente la matrice de stockage de la figure 2a après remplissage par de l'ammoniac ;
- les figures 3a et 3b représentent l'effet d'expansion obtenu lors du chargement de la structure de stockage par un gaz (exemple l'ammoniac) sur les éléments compressibles et les parois d'enceinte de stockage.
- les figures 4a à 4c représentent différentes variantes d'éléments compressibles ;
- les figures 5a à 5c représentent des alternatives d'associations entre éléments absorbeurs de gaz et éléments compressibles à effet amortisseur (« damper » en terminologie anglo-saxonne) ; et
- le tableau 1 représente le ratio d'expansion théorique de complexes ammoniacates.

### Description détaillée de l'invention

### 1) Propriétés connues de la chemisorption d'ammoniac dans les sels

### a) Réaction

Dans une structure de stockage, un sel pulvérulent est choisi parmi les chlorures d'alcalino-terreux. En particulier, le sel pulvérulent est choisi parmi les composés suivants : SrCl₂, MgCl₂, BaCl₂, CaCl₂, NaCl₂. Le stockage d'ammoniac repose par ailleurs sur une réaction réversible solide - gaz du type :

< Solide A > + (Gaz) ⇄ < Solide B >

L'ammoniac forme avec les chlorures d'alcalino-terreux des complexes de coordination aussi appelés ammoniacates. Ce phénomène est connu de l'homme du métier.

Par exemple, les réactions de l'ammoniac avec le chlorure de strontium sont :

SrCl₂ (s) + NH₃ (g) ⇄ Sr(NH₃)Cl₂ (s)

Sr(NH₃)Cl₂ (s) + 7 NH₃ (g) ⇄ Sr(NH₃)₈Cl₂ (s)

De même l'unique réaction de l'ammoniac avec le chlorure de barium est :

BaCl₂ (s) + 8 NH₃ (g) ⇄ Ba(NH₃)₈Cl₂ (s)

L'absorption chimique du ligand ammoniac par l'absorbant SrCl₂ et BaCl2 entraîne, entre le solide et le gaz, un transfert d'électrons qui se traduit par des liaisons chimiques entre NH₃ et la couche externe des atomes de SrCl₂ et BaCl₂. La pénétration du gaz dans la structure du solide se faisant dans la totalité de sa masse par un processus de diffusion. Cette réaction est parfaitement réversible, l'absorption étant exothermique et la désorption endothermique.

### b) Dilatation

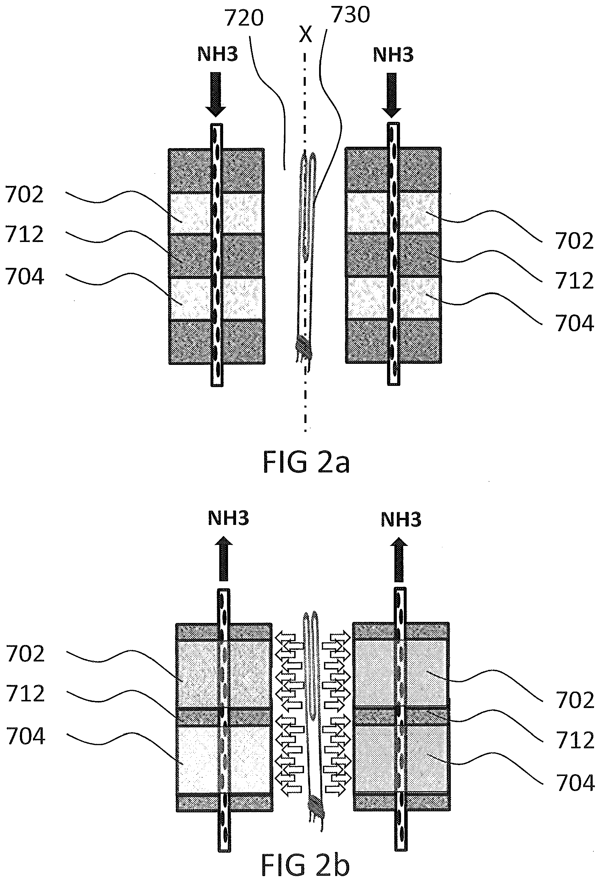

En référence aux figures 2a à 2d, la dilatation résultant du phénomène d'absorption dans le cas du sel chlorure de magnésium est décrit. La figure 2a représente la structure cristalline d'une couche de sel de MgCl₂. La figure 2b représente une molécule d'ammoniac.

Les réactions de l'ammoniac avec le chlorure de magnésium sont de la forme :

MgCl₂ (s) + nNH₃ (g) ⇄ MgCl₂ (NH₃)*ₙ* (s)

Où n peut valoir 2 ou 6. Ainsi la figure 2c représente la structure cristalline du MgCl₂(NH₃)₂ et la figure 2d la structure crystalline duMgCl₂(NH₃)₆.

En référence à la table 1, il est indiqué le facteur de dilatation théorique entre différents sels pur et leurs complexes purs associés. Cette valeur correspond uniquement à la dilatation du réseau cristallin, n'intègre par la dilatation du au fractionnement entre les microcristaux. Les valeurs d'enthalpie d'absorption à l'équilibre à pression de vapeur basse.

**Tableau 1**

| Formule moléculaire | Masse moléculaire (g/mol) | Densité (kg/L) | Facteur de dilatation | Enthalpie d'absorption (kJ/mol) | Entropie d'absorption (J/mol.K) |
|---|---|---|---|---|---|
| (NH₂)₂CO⁺H2O | N/A | 1,086 | | 0,184 | 0,2 |
| MgCl₂ | 95,21 | 2,32 | | | |
| Mg(NH₃)₆Cl₂ | 197,39 | 1,16 | 2 | 55,7 | 230 |
| SrCl₂ | 158,53 | 3,05 | | | |
| Sr(NH₃)₈Cl₂ | 294,77 | 1,3 | 2,35 | 38,7 | 230 |
| BaCl₂ | 208,23 | 3,85 | | | |
| Ba(NH₃)₈Cl₂ | 344,37 | 1,7 | 2,26 | 41,4 | 230 |
| NH₃ | 17,03 | 0,61 | | | |

### c) Conditions sur la structure de stockage

Une structure de stockage d'ammoniac doit pouvoir assurer plusieurs cycles de remplissage/vidage au cours de la vie du véhicule auquel elle est associée. Ces cycles de vidage/remplissage donnent lieu à des changements de phase de l'ammoniac. Le vidage sera provoqué par élévation de température de la structure, le remplissage quant à lui est assuré après connexion d'une enceinte 8 à un circuit d'alimentation 200 d'ammoniac sous pression et via un dispositif de refroidissement de l'ensemble, destiné à évacuer les calories dégagées lors du changement de phase de l'ammoniac.

Dans le cas d'une absorption du gaz dans un sel pulvérulent, le gaz diffuse au travers du milieu poreux de sel de la structure de stockage, depuis le grain de sel vers la sortie de l'enceinte, par exemple une cartouche, permettant la mise à disposition de l'ammoniac à injecter à l'échappement.

Lors de la phase de conditionnement et de reconditionnement de l'enceinte, l'ammoniac est réintroduit dans le système, diffuse au sein du milieu poreux créé par le sel pulvérulent et s'absorbe au sein des grains de sel. Le cycle de ces transformations dans le temps, ou respiration du matériau, doit pouvoir se faire sans détérioration de la capacité de stockage et avec des durées raisonnables. Des gradients de compression hétérogènes dans le sel et des mécanismes de frittage peuvent en effet détériorer la structure de stockage.

### d) Additifs

Il est parfois décrit l'ajout d'additif en poudre à un sel, pour améliorer la conductivité thermique et rendre la structure de stockage plus robuste, c'est-à-dire plus apte à se remplir. L'ajout de divers additifs a été envisagé dans l'état de l'art.

L'additif peut comprendre du graphite naturel expansé qui peut ainsi être ajouté au sel avant d'être mis en forme.

L'additif peut comprendre une poudre de métal, par exemple une poudre d'aluminium.

### e) Mise en oeuvre d'un système de désorption de gaz à partir de la matrice de stockage

La réalisation *in fine* d'un système utilisant une matrice de stockage de gaz, par exemple de l'ammoniac, implique l'intégration de la matrice et de son stock d'ammoniac à l'intérieur d'une enceinte de stockage. L'état de l'art en matière d'utilisation de stockage solide d'ammoniac pour la dépollution deNOx, consiste à intégrer l'ammoniac par lit fluidisé au matériau de stockage, le matériau de stockage étant par exemple un sel, puis de compresser ledit matériau sous forme de galettes préformées prêtes à être empilées à l'intérieur de l'enceinte de stockage.

On peut alors intégrer un dispositif de chauffage de l'ensemble, par exemple une résistance électrique, par exemple sous forme de couverture chauffante entourant l'enceinte de stockage, ledit dispositif de chauffage étant actionné selon une consigne lorsqu'une pression de gaz est requise. Dans le cas d'un tel système appliqué à la DeNOx SCR (réduction catalytique sélective) solide, le chauffage est actionné selon un algorithme hébergé dans un calculateur qui en assure le contrôle, par exemple l'ECU moteur (bloc de contrôle électronique, « Electronic Control Unit » en terminologie anglo-saxonne), de manière à ce que le système génère un débit d'ammoniac gazeux en quantité stoechiométrique vis-à-vis de la quantité de NOx générée à l'échappement.

Au cours des phases d'utilisation d'un véhicule équipé d'un tel système, le système va se vider progressivement de l'ammoniac stocké en fonction des émissions de NOx du véhicule. Une fois vide, le système devra être rechargé en ammoniac, par exemple à l'occasion d'une opération de maintenance. En raisons des contraintes de taille de l'enceinte de stockage, ce cycle de vidage/remplissage sera généralement amené à se produire plusieurs fois dans la vie d'un même véhicule.

Dans la pratique, l'état de l'art rapporte que la matrice de stockage peut être dimensionnée de manière à pouvoir, une fois saturée, contenir la quantité d'ammoniac nécessaire pour traiter les d'oxyde d'azote totales émises entre deux intervalles de vidange du véhicule (20 000km à 30 000km selon les constructeurs). Si l'on admet une durée de vie de 250 000 km pour le véhicule, il apparaît que le nombre moyen de vidage(s)/remplissage(s) du système avoisine dix.

Un souci d'encombrement minimal du système incite à maximiser la compression de la matrice de stockage ce qui minimise le volume de vide en son sein. Des densités, mesurant le ratio entre masse d'ammoniac et volume occupé par la matrice de stockage, comprises entre 0,4 et 0,5 sont souvent mentionnées.

Plus la densité obtenue est élevée et plus le volume d'encombrement sera faible, d'où une plus grande facilité d'intégration sur véhicule, mais l'augmentation de la densité s'accompagne aussi de plusieurs difficultés :
- une plus grande difficulté à désorber l'ammoniac (puissance électrique consommée plus importante, durée de maintien d'un débit de gaz donné limitée par le temps de diffusion du gaz depuis le sein de la matrice de stockage vers la sortie de l'enceinte de stockage) ;
- une plus grande difficulté à remplir l'enceinte de stockage (la compression du matériau rend plus difficile la diffusion de l'ammoniac depuis les espace libres jusqu'au sein de la matrice poreuse), ce qui rend l'opération de maintenance périodique du système (par exemple le remplissage) plus longue et donc plus complexe et onéreuse ;
- par ailleurs, plus la compression de la matrice de stockage sera élevée à l'intérieur de l'enceinte de stockage, et plus la contrainte exercée par le matériau chargé sur les parois de l'enceinte de stockage sera importante, ce qui a des répercussions sur le matériau utilisé et son épaisseur et donc sa masse ;
- une telle mise en oeuvre par compression de matériau de stockage préalablement saturé en ammoniac, peut conduire à des déficits de durabilité au cours des cycles successifs de sorption / désorption du fait de l'attrition ou l'agglomération de la matière stockante.

La présente invention a pour but de pallier ces différentes difficultés, en réalisant le remplissage de l'ammoniac ultérieurement, par une unité de stockage et une structure de stockage de gaz par absorption ou adsorption.à l'intérieur d'un élément de stockage solide non ou faiblement compressé, l'élément de stockage jouxtant un élément compressible, dit amortisseur (« damper » en terminologie anglo-saxonne), adapté pour absorber l'augmentation de volume liée à l'absorption du gaz, par exemple d'ammoniac. Par absorption on entend par exemple que les molécules de gaz s'insèrent à l'intérieur du crystal propre à l'élément de stockage. Par adsorption on entend par exemple que les molécules de gaz forment des liaisons de surface de type Van der Waals avec l'élément de stokage L'élément compressible est en contact avec l'élément de stockage et est adapté pour se déformer sous l'action d'efforts exercés par l'élément de stockage lors de variations de volume de l'élément de stockage au cours de phases de stockage et déstockage de gaz, de manière à limiter les efforts appliqués sur une enceinte entourant la structure. L'élément compressible est par exemple adapté pour se déformer élastiquement. L'élément compressible peut être adapté pour se déformer en partie de manière élastique. L'association de ces au moins deux éléments permet à la structure de respirer, de minimiser les temps de libération et de remplissage en ammoniac, d'apporter une plus grande souplesse dans le choix des matériaux et design de d'enceinte de stockage, d'augmenter le nombre de cycles de vidage/remplissage possibles en préservant la durabilité de l'ensemble, d'une manière générale en offant une très grande flexibilité de conception du système vis-à-vis des contraintes applicatives rencontrées. L'élément de stockage permet un stockage par absorption ou par adsorption.

Par structure de stockage on entend un ensemble comprenant un matériau de stockage, l'ensemble étant adapté pour être placé dans une enceinte de stockage.

### 2) Structure illustrant un mode de réalisation de l'invention

La structure de stockage décrite ci-après permet d'éviter les difficultés liées à un stockage dans une structure constituée uniquement de sel, sous forme de galettes compressées après saturation en ammoniac et avant intégration dans une enceinte de stockage pour former une unité de stockage.

Une telle structure de stockage d'ammoniac comprend au moins un élément de stockage, par exemple au moins une couche, par exemple au moins deux couches, chacune formant un élément de stockage, chaque couche comprenant par exemple un sel, par exemple un sel pulvérulent, sous forme compressée ou non compressée, adapté pour stocker et déstocker de l'ammoniac, le sel pouvant être compressé ou non au préalable. Les au moins deux couches de sel, sont séparées l'une de l'autre par au moins un élément compressible, présentant par exemple un effet amortisseur (« damper » en terminologie anglo-saxonne), permettant d'absorber les dilatations et rétractions des éléments de stockage, lesquelles sont fonction de la quantité d'ammoniac stockée dans la structure.

L'élément de stockage et l'élément compressible sont ici présentés à titre d'exemple indicatif sous forme de couches. D'autres formes d'éléments sont cependant envisageables par l'homme du métier.

L'élément de stockage comprend par exemple un matériau de stockage sélectionné parmi un complexe de sel de métal amine de formule Ma(NH3)nXz, où :
- M est au moins un cation selectionné parmi les métaux alcalins tels que Li, Na, K ou Cs, métaux alkalino-terreux tels que Mg, Ca, Sr, ou Ba, et/ou des métaux de transition tels que V, Cr, Mn, Fe, Co, Ni, Cu, ou Zn ou une combinaison des éléments précédents, tels que NaAl, KAI, K2Zn, CsCu, ou K2Fe,
- X est un pour plusieurs anions sélectionnés parmi ions fluoride, chloride, bromide, iodide, nitrate, thiocyanate, sulphate, molybdate et phosphate ;
- a est un nombre de cations par molécule de sel, et
- n est un nombre de coordination compris entre 2 et 12, de préférence compris entre 6 et 8.

Le sel, par exemple pulvérulent, peut être choisi parmi les chlorures d'alcalino-terreux. En particulier, le sel peut comprendre ou être constitué des composés suivants : SrCl₂, MgCl₂, BaCl₂, CaCl₂, NaCl₂.Chaque couche de sel formant élément de stockage peut comprendre préférentiellement des grains de sel dont la granulométrie est comprise entre 1 et 1000 µm. Préférentiellement, la masse de matériau thermiquement conducteur peut constituer entre 1 % et 30% de la masse de sel.

Chaque couche de sel formant élément de stockage, peut avoir la densité de la poudre du même sel sans compression. Chaque couche de sel formant élément de stockage peut être compressée. Chaque couche de sel formant élément de stockage peut être sous forme d'un bloc rigide. Chaque couche de sel formant élément de stockage peut contenir une proportion de matériau thermiquement conducteur en son sein, matériau conducteur tel que du graphite naturel expansé ou une poudre métallique, par exemple.

L'élément compressible est par exemple constitué d'un milieu poreux. L'élément compressible comprend par exemple une matrice poreuse de graphite naturel expansé. L'élément compressible peut par exemple comprendre ou être constitué d'au moins une couche de graphite naturel expansé préalablement compressé ou pré-comprimé, avant mise en place dans l'enceinte, à une valeur intermédiaire entre sa densité libre et la densité du squelette de graphite qui le constitue. Par exemple, un graphite naturel expansé peut présenter une valeur de densité libre cent fois plus faible que la valeur de densité du squelette de graphite qui le constitue. Par compression avant intégration dans le système, on pourra également, toujours à titre d'exemple, dimensionner des éléments de graphite à une densité dix fois inférieur à la densité dudit squelette.

Le taux de compressibilité de l'élément compressible est par exemple supérieur ou égal au taux d'expansion, en l'absence de contrainte, de l'élément de stockage de gaz entre un état libre de tout gaz et un état de saturation en gaz. Le taux de compressibilité de l'élément compressible peut par exemple être supérieur ou égal à une fraction de ce taux d'expansion. De cette manière, une partie des efforts résultants de l'augmentation de volume de l'élément de stockage sont absorbés par l'élément compressible. La valeur du taux de compressibilité de l'élément compressible peut être définie en fonction de l'enceinte dans laquelle il est destiné à être intégré. Ainsi une enceinte de stockage en métal, typiquement en acier inoxydable, offre une importante capacité d'absorption des efforts et un taux de compressibilité de 50% ou inférieur à 50% pourra être choisi. L'enceinte de stockage peut également être réalisée en matière plastique, en matériau composite comprenant par exemple de la fibre de carbone. Des hybrides de ces matériaux peuvent également être envisagés, tel qu'une structure de base fine en métal renforcée par une matrice en matériau composite.

La structure peut comprendre une succession d'éléments de stockage et d'éléments compressibles, par exemple une série d'éléments de stockage séparés deux à deux par des éléments compressibles. Le système peut comprendre une telle organisation d'éléments présentant un empilement ou une juxtaposition d'éléments de stockage et d'éléments compressibles aux formes diverses. Par exemple, on pourra réaliser une alternance de disques d'éléments de stockage et d'éléments compressibles, dans une enceinte par exemple à symétrie de révolution. Il est également possible de réaliser une structure comprenant des couches intercalaires présentant à chaque étage une combinaison d'élément de stockage et d'élément compressible. En outre, la structure de stockage peut prendre la forme d'une succession d'éléments absorbants et d'éléments compressibles de forme cylindriques.

Dans le cas d'un empilement de couches alternées, le nombre de couches intercalaires d'éléments absorbeurs peut être préférentiellement compris entre 1 et 30.

La structure peut être intégrée à un dispositif où le sel pulvérulent non compressé emplit un espace laissé libre par au moins un élément compressible formant une structure de matériau absorbeur de dilatation de forme quelconque intégré à l'intérieur du volume de l'enceinte de stockage.

Pour une application donnée, la présente invention permet une très grande flexibilité de conception, en terme de ratio entre masse de matériau absorbant et masse de l'au moins un élément compressible, de la taille, de la forme et de la densité de l'au moins un élément compressible et de l'au moins un élément de stockage. Pour une application donnée, la présente invention permet également une très grande flexibilité de conception pour le matériau de l'enceinte de stockage, qui peut comprendre par exemple du métal, un plastique ou un ensemble deplastiques, un ou plusieurs composites, voire une hybridation de ces matériaux.

### 3) Exemple illustrant un mode de réalisation de système de post-traitement SCR

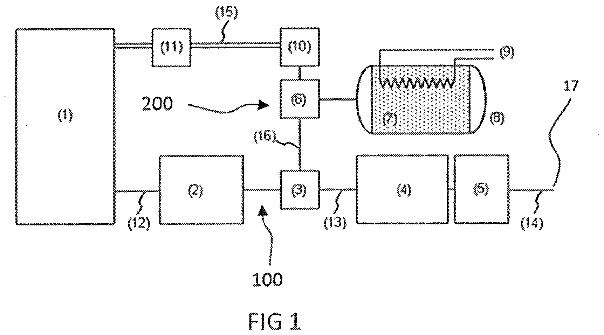

Sur la figure 1, on a représenté schématiquement un moteur thermique équipé d'un système de réduction catalytique sélective pour gaz d'échappement de moteur à combustion interne, par exemple un système de post-traitement SCR par injection d'ammoniac. Le moteur thermique peut être un moteur à combustion interne, par exemple un moteur diesel, ou un moteur essence à mélange pauvre tel qu'un moteur à injection directe à mélange stratifié.

Un moteur 1 est piloté par un calculateur électronique 11. En sortie du moteur, des gaz d'échappement 12 sont dirigés vers un système de dépollution 2. Le système de dépollution 2 peut comprendre un catalyseur d'oxydation ou un catalyseur à trois voies. Le système de dépollution peut en outre comprendre un filtre à particules.

De l'ammoniac 16 est injecté au niveau d'un circuit d'échappement 100 du moteur et mélangé aux gaz d'échappement au moyen d'un module d'injection 3 disposé par exemple en aval de l'élément de dépollution 2 pour former un mélange ammoniac / gaz d'échappement 13. Le mélange ammoniac / gaz d'échappement 13 traverse ensuite un catalyseur SCR 4 qui permet la réduction des NOx par l'ammoniac. Des éléments complémentaires de post-traitement 5 peuvent être positionnés après le catalyseur SCR. Les éléments complémentaires 5 peuvent comprendre un filtre à particules ou un catalyseur d'oxydation. Les gaz d'échappement se présentent ainsi sous une forme de gaz d'échappement dépollués 14 en sortie des éléments complémentaires 5. Les gaz d'échappement dépollués sont ensuite dirigés vers une sortie d'échappement 17. Ainsi l'échappement 100 comprend, disposés de l'amont, côté moteur 1, à l'aval, côté sortie 17, l'élément de dépollution 2, le module d'injection 3, le catalyseur SCR 4, et les éléments complémentaires 5.

Pour assurer une alimentation et un dosage de l'ammoniac 16 en entrée du module d'injection 3, le système comprend une unité de stockage comprenant une enceinte de stockage d'ammoniac 8 contenant par exemple une structure de stockage 7 pouvant être piloté en température par un dispositif de réchauffage 9. Le dispositif de réchauffage 9 comprend par exemple une résistance électrique ou un échangeur de chaleur alimenté par un fluide caloporteur tel que le liquide de refroidissement moteur.

La structure 7 peut comprendre des canaux d'acheminement d'ammoniac de l'extérieur de l'enceinte de stockage 8 vers les couches de sel et/ou dans le sens inverse.

L'enceinte de stockage 8 est par exemple connectée à un dispositif 6 de contrôle en pression de l'enceinte et de dosage de l'ammoniac vers le module d'injection 3. Ce dispositif 6 peut être piloté par un contrôleur électronique dédié 10 relié au calculateur électronique 11 du moteur.

Le système comprend ainsi un circuit d'alimentation en ammoniac 200 comprenant, d'amont en aval dans le sens de circulation de l'ammoniac, l'enceinte de stockage 8, le dispositif 6, et le module d'injection 3 dans l'échappement 100.

Dans une configuration alternative (non représentée), le dispositif 6 peut être directement piloté par le calculateur moteur 11.

La structure de stockage 7 est décrite plus précisément aux figures 2a et 2b. La structure de stockage 7 comprend au moins un élément de stockage comprenant une couche de sel pulvérulent, par exemple au moins une première couche de stockage 702 en sel pulvérulent et une deuxième couche de stockage 704 en sel pulvérulent. Les au moins deux couches de sel pulvérulent sont séparées les unes des autres par au moins une couche compressible, par exemple en un matériau damper, afin d'orienter et de limiter une déformation de la structure lors de stockage et de déstockage de l'ammoniac. On entend par matériau damper, un matériau qui, au contact d'un matériau susceptible de se dilater possède la propriété de pouvoir se contracter. Ainsi la premier couche de stockage 702 et la deuxième couche de stockage 704 sont séparées l'une de l'autre par une couche compressible 712.

Les éléments, par de la structure de stockage, par exemple formés de couches, peuvent présenter une symétrie de révolution de même axe X. La structure peut alors présenter un évidement le long de l'axe de symétrie de révolution pour permettre le stockage et/ou le déstockage d'ammoniac au niveau de chaque élément de stockage.

La figure 2a représente une structure de stockage comprenant un empilement successif d'éléments de stockage d'ammoniac et d'éléments compressibles avant intégration d'ammoniac. Dans cette configuration particulière, les divers éléments ont une symétrie de révolution, des épaisseurs constantes, ils sont troués en leur centre pour laisser la place à un conduit 722 dans lequel est inséré un élément chauffant 730. L'élement chauffant peut par exemple être une résistance, ou un conduit à l'intérieur duquel circule un liquide caloporteur. Par ailleurs des diffuseurs présentant des conduits métalliques percés de trous sont disposés de telle sorte à traverser la structure de stockage, par exemple selon un axe parallèle à l'axe X. Les diffuseurs sont adaptés pour amener de l'ammoniac depuis l'extérieur de l'enceinte de stockage vers le matériau de stockage des éléments de stockage. Les diffuseurs peuvent également être utilisés pour acheminer l'ammoniac depuis la structure de stockage ou une matrice de stockage de la structure de stockage vers l'extérieur en cours de fonctionnement du système.

La figure 2b représente schématiquement la même structure de stockage, après que de l'ammoniac a saturé tout ou partie du matériau de stockage, on voit alors l'expansion de l'au moins un élément de stockage de l'ammoniac, au détriment de de l'au moins un élément compressible qui se comprime alors, évitant ainsi, d'une part, que tout ou partie de l'effort consécutif au chargement en ammoniac ne s'applique sur les parois de l'ensemble de stockage. Une telle structure de stockage permet une plus grande flexibilité de design de l'enceinte de stockage. Une telle structure de stockage permet d'éviter que le chargement en ammoniac ne conduise à une destruction de la macro-porosité du matériau de stockage de l'au moins un élément de stockage. La macro-porosité est en effet un facteur clé d'une mise à disposition ou d'un remplissage rapide et efficace de l'ammoniac au cours du cycle de respiration de la structure de stockage, c'est-à-dire le cycle comprenant le remplissage et le vidage successifs de la structure de stockage. Il est ainsi possible d'obtenir une structure de stockage présentant une matrice respirante, intègre dans le temps.

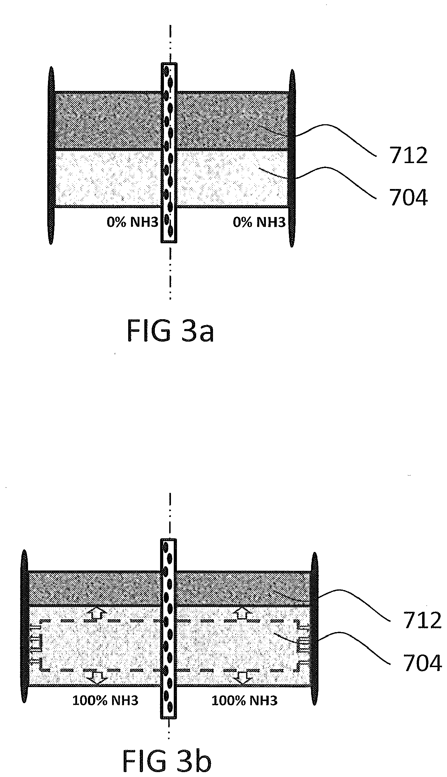

Les figures 3a et 3b illustrent schématiquement un détail de la même structure de stockage soumise au même phénomène de sorte à mettre en évidence l'impact du système de stockage d'ammoniac sur l'effort de dilatation sur la paroi de l'enceinte de stockage. L'expansion d'un élément de stockage tel que la couche de stockage 704 provoque ainsi la compression de l'élément compressible tel que la couche compressible 712, qui absorbe une partie ou la totalité de l'effort résultant de l'expansion de l'élément de stockage. Il ainsi possible de diminuer fortement l'effort appliqué par l'élément de stockage sur la paroi latérale de l'enceinte de stockage. Dans le cas d'un matériau ayant une faible résistance aux efforts de dilatation, il est possible de dimensionner la succession d'éléments de sorte à ce que l'intégralité de la dilatation de l'élément stockeur soit absorbée par la compression des éléments compressibles. Cette situation pourra avoir l'avantage d'utiliser des matériaux moins onéreux, mais pourra augmenter l'encombrement total du système. Il est ainsi possible de définir un compromis entre l'encombrement et la nature du matériau constitutif de l'enceinte de stockage.

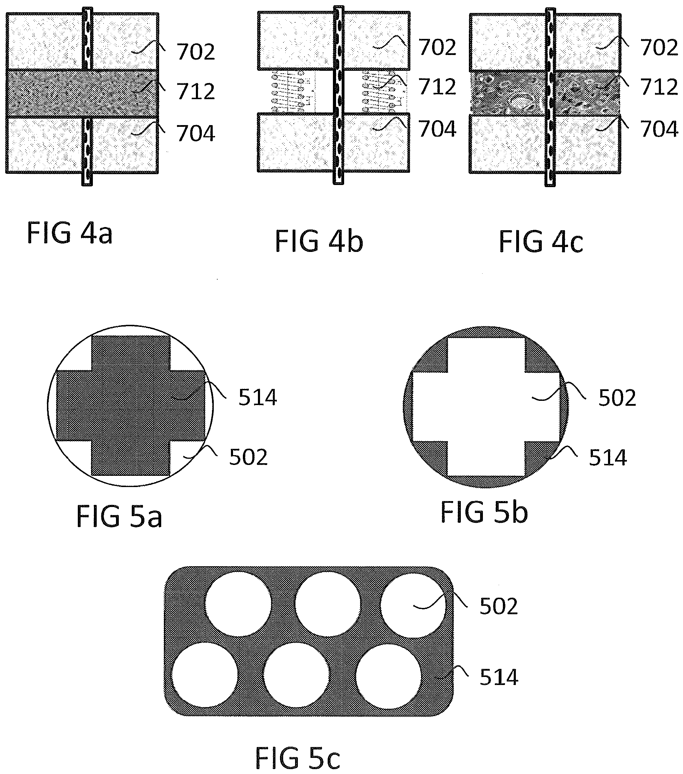

Les figures 4a à 4c illustrent des philosophies alternatives d'éléments compressibles. La figure 4a représente ainsi un élément compressible comprenant une couche de graphite naturel expansé partiellement pré-compressé. La figure 4b représente un élément compressible comprenant des plaques, par exemple deux plaques, par exemple métalliques. Une plaque au moins est maintenue en appui contre l'élément compressible. Les deux plaques sont connectées et/ou séparées par des moyens mécaniques, par exemple au moins un élément mécanique élastique tel qu'un ressort ou une pluralité de ressorts. Un tel élément compressible présente une grande simplicité dans sa mise en oeuvre, et permet une réversibilité contrôlée des cycles de dilatation / compression de la structure. La figure 4b représente un élément compressible comprenant des mousses ou feutres, par exemple dans des matériaux souples comme par exemple des pailles métallique, des mousses de nickel ou tout autre matériau connu de l'homme du métier.

Les figures 5a à 5c illustrent d'autres modes de réalisation d'association entre élément de stockage 502 et élément compressible 514.

La structure de stockage peut comprendre une première combinaison d'un élément de stockage intégré dans un élément compressible de manière à être entouré par l'élément compressible. La structure de stockage peut comprendre une deuxième combinaison d'un élément compressible intégré dans un élément de stockage de manière à être entouré par l'élément de stockage. La structure de stockage peut ainsi comprendre une alternance de première combinaison et de deuxième combinaison, tel que représenté aux figures 5a et 5b.

Les figures 5a et 5b représentent des vues d'une même matrice de forme cylindriques selon 2 plans de coupe différent montrant une répartition variable entre élément de stockage 502 et élément compressible 514 en fonction de la hauteur. Les plans de coupe correspondant aux deux figures sont par exemple parallèles, la figure 5a représentant une coupe d'une première couche de forme sensiblement circulaire dans laquelle l'élément compressible 514 présente une surface cruciforme intérieure à la couche, l'élément de stockage 502 occupant la zone périphérique entre l'élément compressible 512 et la bordure circulaire de la couche. La figure 5b représente une coupe d'une deuxième couche dans laquelle les surfaces occupées par l'élément de stockage 502 et l'élément compressible 512 sont inversées par rapport à la première couche.

La structure de stockage peut comprendre une série d'éléments de stockage intégrés dans un élément compressible commun. Ainsi la figure 5c représente une enceinte de stockage de forme non cylindrique, typiquement de forme sensiblement rectangulaire, aisément intégrable sur un véhicule. Les éléments de stockage 504 de l'ammoniac sont intégrés longitudinalement dans l'enceinte de stockage, à l'intérieur d'une structure formant élément compressible 514 permettant l'amortissement de la dilatation, facilitant ainsi l'utilisation d'une enceinte de stockage de forme non cylindrique, pour diminuer encore la sensibilité aux surpressions de gaz ou au déformations par dilatation.

### 4) Procédé associé

Un exemple de procédé d'obtention d'une telle structure de stockage de gaz ou d'une telle unité de stockage, comprend des étapes consistant à :
- déposer une élément de stockage comprenant un sel non compressé ou préalablement compressé,
- déposer élément en un matériau compressible.

Ces deux étapes sont répétées alternativement pour former une structure comprenant une série d'éléments de stockage et de couches compressibles intercalaires, maintenues en contact avec les couches de stockage.

Dans le cadre d'un procédé d'obtention d'une unité de stockage, ces étapes peuvent être compléter d'une ou de plusieurs étapes consistant à placer les éléments ou la structure obtenue dans une enceinte des stockage.

Les éléments compressibles sont adaptés pour se déformer sous l'action d'efforts exercés par les éléments de stockage, limitant et orientant une déformation de la structure de stockage, lors des déformations des éléments de stockage au cours de phases de stockage et déstockage de gaz de ladite structure, de sorte à limiter les efforts appliqués sur une enceinte entourant la structure.

## Revendications

1. Unité de stockage de gaz par absorption ou adsorption, comprenant une enceinte (8) abritant un élément de stockage (702, 704, 502) de gaz par absorption ou adsorption, **caractérisée en ce qu'**elle comprend en outre un élément compressible (712, 514) également prévu dans l'enceinte (8) et maintenu en contact avec l'élément de stockage (702, 704, 502) et adapté pour se déformer sous l'action d'efforts exercés par l'élément de stockage (702, 704, 502) lors de variations de volume de l'élément de stockage (702, 704, 502) au cours de phases de stockage et déstockage de gaz, de manière à limiter les efforts appliqués sur l'enceinte (8),
dans laquelle l'élément compressible (712, 514) comprend une matrice poreuse de graphite naturel expansé.

2. Unité de stockage selon la revendication 1, dans laquelle l'élément de stockage (702, 704, 502) est sous forme pulvérulente, compressée ou non compressée.

3. Unité de stockage selon l'une quelconque des revendications 1 ou 2,
dans laquelle l'élément compressible (712, 514) est constitué un milieu poreux.

4. Unité de stockage selon l'une des revendications 1 à 3, dans laquelle le graphite naturel expansé est pré-comprimé avant mise en place dans l'enceinte (8).

5. Unité selon l'une des revendications 1 à 4, comprenant une série d'éléments de stockage (702, 704, 502) séparés deux à deux par des éléments compressibles (712, 714).

6. Unité selon l'une quelconque des revendications 1 à 4, comprenant une première combinaison d'un élément de stockage (502), intégré dans un élément compressible (514) de manière à être entouré par l'élément compressible (514).

7. Unité de stockage selon l'une quelconque des revendications 1 à 4, comprenant une deuxième combinaison d'un élément compressible (514) intégré dans un élément de stockage (502) de manière à être entouré par l'élément de stockage (502).

8. Unité de stockage selon les revendications 6 et 7, comprenant une alternance de première combinaison et de deuxième combinaison.

9. Unité de stockage selon l'une quelconque des revendications 1 à 4, comprenant une série d'éléments de stockage (502) intégrés dans un élément compressible commun (514).

10. Unité de stockage selon l'une quelconque des revendications 1 à 9,
dans laquelle l'élément compressible (712) comprend deux parties, une partie au moins étant maintenue en appui contre l'élément compressible (712), les deux parties étant interconnectées par un élément mécanique élastique.

11. Unité de stockage selon la revendication 10, dans laquelle l'élément mécanique élastique comprend un ressort.

12. Structure de stockage de gaz par absorption ou adsorption, adaptée pour être disposée dans une enceinte (8), la structure comprenant un élément de stockage (702, 704, 502) de gaz par absorption ou adsorption, **caractérisée en ce qu'**elle comprend en outre un élément compressible (712, 514) maintenu en contact avec l'élément de stockage (702, 704, 502) et adapté pour se déformer sous l'action d'efforts exercés par l'élément de stockage (702, 704, 502) lors de variations de volume de l'élément de stockage (702, 704, 502) au cours de phases de stockage et déstockage de gaz, dans laquelle l'élément compressible (712, 514) comprend une matrice poreuse de graphite naturel expansé.

13. Système de réduction catalytique sélective pour gaz d'échappement de moteur à combustion interne, **caractérisé en ce qu'**il comprend une unité de stockage d'ammoniac selon l'une quelconque des revendications 1 à 11 et un module d'injection de l'ammoniac dans les gaz d'échappement.

14. Procédé d'obtention d'une structure de stockage selon la revendication 12, comprenant des étapes consistant à :
- déposer un élément de stockage comprenant un sel non compressé ou préalablement compressé,
- déposer un élément en un matériau compressible,
ces deux étapes étant répétées alternativement pour former une structure comprenant une série d'éléments de stockage et de couches compressibles intercalaires, maintenues en contact avec les couches de stockage.

15. Procédé d'obtention d'une unité de stockage comprenant :
- un procédé d'obtention d'une structure de stockage selon la revendication 14, et
- une ou de plusieurs étape(s) consistant à placer les éléments ou la structure obtenue dans une enceinte des stockage.

## Patentansprüche

1. Lagereinheit für Gas durch Absorption oder Adsorption, umfassend einen Behälter (8), der ein Lagerelement (702, 704, 502) für Gas durch Absorption oder Adsorption schützt, **dadurch gekennzeichnet, dass** sie ferner ein komprimierbares Element (712, 514) umfasst, das ebenfalls in dem Behälter (8) vorgesehen ist und mit dem Lagerelement (702, 704, 502) in Kontakt gehalten wird und ausgebildet ist, um sich unter der Wirkung von Kräften, die von dem Lagerelement (702, 704, 502) bei Volumenänderungen des Lagerelements (702, 704, 502) während Phasen der Einlagerung und Auslagerung von Gas ausgeübt werden, derart zu verformen, dass die auf den Behälter (8) ausgeübten Kräfte begrenzt sind,
wobei das komprimierbare Element (712, 514) eine poröse Matrix aus expandiertem natürlichem Graphit umfasst.

2. Lagereinheit nach Anspruch 1, wobei das Lagerelement (702, 704, 502) in pulverförmiger Form, komprimiert oder nicht komprimiert, vorliegt.

3. Lagereinheit nach einem der Ansprüche 1 oder 2,
wobei das komprimierbare Element (712, 514) aus einem porösen Medium gebildet ist.

4. Lagereinheit nach einem der Ansprüche 1 bis 3,
wobei der expandierte natürliche Graphit vor der Platzierung im Behälter (8) vorkomprimiert ist.

5. Einheit nach einem der Ansprüche 1 bis 4, umfassend eine Reihe von Lagerelementen (702, 704, 502), die jeweils zu zweit durch komprimierbare Elemente (712, 714) getrennt sind.

6. Einheit nach einem der Ansprüche 1 bis 4, umfassend eine erste Kombination eines Lagerelements (502), derart integriert in ein komprimierbares Element (514), dass es von dem komprimierbaren Element (514) umschlossen ist.

7. Lagereinheit nach einem der Ansprüche 1 bis 4, umfassend eine zweite Kombination eines komprimierbaren Elements (514), derart integriert in ein Lagerelement (502), dass es von dem Lagerelement (502) umschlossen ist.

8. Lagereinheit nach den Ansprüchen 6 und 7, umfassend eine Abfolge aus erster Kombination und zweiter Kombination.

9. Lagereinheit nach einem der Ansprüche 1 bis 4, umfassend eine Reihe von Lagerelementen (502), die in ein gemeinsames komprimierbares Element (514) integriert sind.

10. Lagereinheit nach einem der Ansprüche 1 bis 9,
wobei das komprimierbare Element (712) zwei Teile umfasst, wobei mindestens ein Teil durch Stützen gegen das komprimierbare Element (712) gehalten wird, wobei die zwei Teile durch ein elastisches mechanisches Element miteinander verbunden sind.

11. Lagereinheit nach Anspruch 10, wobei das elastische mechanische Element eine Feder umfasst.

12. Lagerstruktur für Gas durch Absorption oder Adsorption, ausgebildet, um in einem Behälter (8) angeordnet zu sein, wobei die Struktur ein Lagerelement (702, 704, 502) für Gas durch Absorption oder Adsorption umfasst, **dadurch gekennzeichnet, dass** sie ferner ein komprimierbares Element (712, 514) umfasst, das mit dem Lagerelement (702, 704, 502) in Kontakt gehalten wird und ausgebildet ist, um sich unter der Wirkung von Kräften, die von dem Lagerelement (702, 704, 502) bei Volumenänderungen des Lagerelements (702, 704, 502) während Phasen der Einlagerung und Auslagerung von Gas ausgeübt werden, zu verformen, wobei das komprimierbare Element (712, 514) eine poröse Matrix aus expandiertem natürlichem Graphit umfasst.

13. System selektiver katalytischer Reduktion für Auspuffgas eines Verbrennungsmotors, **dadurch gekennzeichnet, dass** es eine Ammoniaklagereinheit nach einem der Ansprüche 1 bis 11 und ein Einspritzmodul von Ammoniak in die Auspuffgase umfasst.

14. Verfahren zur Herstellung einer Lagerstruktur nach Anspruch 12, umfassend die folgenden Schritte:
- Anordnen eines Lagerelements, das ein nicht komprimiertes oder zuvor komprimiertes Salz umfasst,
- Anordnen eines Elements aus einem komprimierbaren Material,
wobei diese beiden Schritte abwechselnd wiederholt werden, um eine Struktur zu bilden, die eine Reihe von Lagerelementen und von komprimierbaren Zwischenschichten umfasst, die mit den Lagerschichten in Kontakt gehalten werden.

15. Verfahren zur Herstellung einer Lagereinheit, umfassend:
- ein Verfahren zur Herstellung einer Lagerstruktur nach Anspruch 14, und
- einen oder mehrere Schritte, die darin bestehen, die Elemente oder die erhaltene Struktur in einem Lagerbehälter zu platzieren.

## Claims

1. A unit for storing gas by absorption or adsorption, including a container (8) harboring a storage element (702, 704, 502) of gas by absorption or adsorption, **characterized in that** it further includes a compressible element (712, 514), also provided in the container (8) and maintained in contact with the storage element (702, 704, 502) and adapted so as to deform under the action of forces exerted by the storage element (702, 704, 502) during volume variations of the storage element (702, 704, 502) during phases of storing and discharging gas, so as to limit the forces applied on the container (8),
wherein the compressible element (712, 514) includes a porous matrix of expansed natural graphite.

2. The storage unit according to claim 1, wherein the storage element (702, 704, 502) is in a compressed or non-compressed powdery form.

3. The storage unit according to any one of claim 1 or 2, wherein the compressible element (712, 514) consists of a porous medium.

4. The storage unit according to one of claims 1 to 3, wherein the expansed natural graphite is pre-compressed before setting it into place in the container (8) .

5. The unit according to one of claims 1 to 4, including a series of storage elements (702, 704, 502) separated two by two with compressible elements (712, 714).

6. The unit according to any one of claims 1 to 4, including a first combination of a storage element (502), integrated into a compressible element (514) so as to be surrounded by the compressible element (514).

7. The storage unit according to any one of claims 1 to 4, including a second combination of a compressible element (514) integrated into a storage element (502) so as to be surrounded by the storage element (502).

8. The storage unit according to claims 6 and 7, including an alternation of first combination and of second combination.

9. The storage unit according to any one of claims 1 to 4, including a series of storage elements (502) integrated into a common compressible element (514).

10. The storage unit according to any one of claims 1 to 9, wherein the compressible element (712) includes two portions, at least one portion being maintained bearing against the compressible element (712), both portions being interconnected through an elastic mechanical element.

11. The storage unit according to claim 10, wherein the elastic mechanical element includes a spring.

12. A structure for storing gas by absorption or adsorption, adapted so as to be positioned in a container (8), the structure including a storage element (702, 704, 502) for gas by absorption or adsorption, **characterized in that** it further includes a compressible element (712, 514) maintained in contact with the storage element (702, 704, 502) and adapted so as to deform under the action of forces exerted by the storage element (702, 704, 502) during volume variations of the storage element (702, 704, 502) during phases of storing and discharging gas, wherein the compressible element (712, 514) includes a porous matrix of expansed natural graphite.

13. A selective catalytic reduction system for exhaust gases of an internal combustion engine, **characterized in that** it includes a unit for storing ammonia according to any one of claims 1 to 11 and a module for injecting ammonia into the exhaust gases.

14. A method for obtaining a storage structure according to claim 12, including the steps of:
- depositing a storage element including a non-compressed or pre-compressed salt,
- depositing an element in a compressible material,
both steps being repeated alternately in order to form a structure including a series of storage elements and of intercalary compressible layers, maintained in contact with the storage layers.

15. A method for obtaining a storage unit including:
- a method for obtaining a storage structure according to claim 14, and
- one or several steps consisting of placing the elements or the structure obtained in a storage container.
